# EUROPÄISCHE PATENTSCHRIFT

(11) **EP 1 261 046 B1**
(45) Veröffentlichungstag und Bekanntmachung des Hinweises auf die Patenterteilung: **28.11.2012**
(21) Anmeldenummer: 02009822.4
(22) Anmeldetag: 02.05.2002
(51) Int. Cl.: H01M 2/16, H01M 4/62, H01M 10/0525

(54) **Verfahren zur Herstellung eines Separator/ Elektrodenverbundes für galvanische Elemente**
Method of manufacturing an electrode/separator assembly for galvanic elements
Méthode de fabrication d'un assemblage électrode/séparateur pour éléments galvaniques

(30) Priorität: 25.05.2001 DE 10125619
(43) Veröffentlichungstag der Anmeldung: 27.11.2002
(73) Patentinhaber: VARTA Microbattery GmbH, 73479 Ellwangen (DE); VOLKSWAGEN VARTA Microbattery Forschungsgesellschaft mbH & Co. KG, 73479 Ellwangen (DE)
(72) Erfinder: Birke-Salam, Fatima, Dr., 73479 Ellwangen (DE); Stelzig, Heinrich, 73494 Rosenberg (DE); Joas, Alfons, 73497 Tannhausen (DE); Holl, Konrad, Dr., 73434 Aalen-Dewangen (DE); Birke, Peter, Dr., 73479 Ellwangen (DE); Ilic, Dejan, Dr., 73479 Ellwangen (DE)
(74) Vertreter: Patentanwälte Ruff, Wilhelm, Beier, Dauster & Partner

(56) Entgegenhaltungen:
- EP-A- 0 892 453
- WO-A-01/39296
- US-A- 5 290 644

## Beschreibung

Gegenstand der Erfindung ist ein Verfahren zur Herstellung eines Separator/Elektrodenverbundes für galvanische Elemente, die mindestens eine lithium-interkalierende Elektrode enthalten, in deren Polymermatrix im Polymer unlösliche elektrochemisch aktive Materialien fein dispergiert sind. Weiterhin ist Gegenstand der Erfindung ein galvanisches Element mit nach dem Verfahren hergestellten Separator/Elektrodenverbund.

Zur Herstellung von Dünnschichtzellen mit Elektroden, die lithium-interkalierende Materialien besitzen, sind die verschiedensten Verfahren bekannt.

Der WO 00/57504 ist beispielsweise eine Dünnschichtzelle zu entnehmen, bei der die positive Elektrode aus einer Pastenmischung von beispielsweise MnO₂, Kohle und Elektrolyt hergestellt wird, wobei die Paste in einen Rahmen einpastiert wird. Anschließend wird auf den Rahmen ein Separator aufgelegt und bei höheren Temperaturen auf die pastöse Elektrode aufgepresst. Nachteilig ist bei solchen Verfahren, dass die pastöse Masse des positiven Elektrodenmaterials schon die Elektrolytlösung enthält, und daher die weitere Verarbeitung möglichst rasch und unter speziellen Bedingungen, insbesondere in einem trockenen Raum, erfolgen muss.

Dem Dokument EP 954 042 A1 ist ein Lithium-lonen Akkumulator zu entnehmen, bei dem die positiven und negativen Folienelektroden mit einem Separator durch eine haftvermittelnde Harzschicht verbunden sind. Die Haftung vermittelnden Schichten können insbesondere einen unerwünschten Isolationseffekt zwischen Elektrode und Separator und damit einen erhöhten Innenwiderstand mit sich bringen. Darüber hinaus können durch solche Schichten unerwünschte Stoffe in die Zelle gelangen.

Dem Dokument EP 1056 142 ist eine Lithiumionenzelle zu entnehmen, bei der zwischen positiven und negativen Elektrodenfolien ein Gelelektrolyt angeordnet ist. Das Gel besteht insbesondere aus Polyvinylidenfluorid oder Copolymeren von Polyvinilydenfluorid. Die Herstellung solcher Zellen ist aufwendig, da eine Verarbeitung der Elektroden und des Gelelektrolyten im Trockenraum notwendig ist. Darüber hinaus wird durch solche Elektrolyte oft keine ausreichende Leitfähigkeit erzielt.

Aus der WO/0069010 ist eine Lithiumionenzelle entnehmbar, bei der als Separator zwischen positiven und negativen Elektroden ein Polyolefinseparator verwendet wird, welcher mit dem gleichen Binderpolymer beschichtet ist, welches in den Elektroden zum Einsatz kommt. Diese Verfahrensweise ist aufwendig, da der Separator zuerst nasschemisch beschichtet werden muss und anschließend noch laminiert werden muss.

EP892453 offenbart ein Verfahren zur Herstellung eines elektrochemisches Generators wobei jede Elektrode wenigstens eine Schicht umfasst, die elektrochemisch aktives Material enthält, einem Separator und einem Klebstoff zusammengesetzt ist.

Aus dem Dokument DE 19 916 041 A1 ist ein Verfahren bekannt, bei dem auf eine mechanisch stabile Trägerfolie beispielsweise eine Kupferfolie, ein graphithaltige Pastenmischung und anschließend ein Separatorband, bestehend aus einer Polymermischung und SiO₂ in Pastenform aufgebracht wird und zu einer Folie verarbeitet wird. Um Durchkontaktierungen der aktiven Masse durch das gelartige Separatorband zu vermeiden, sind bei derartigen Verfahren verhältnismäßig dicke Separatorschichten notwendig, die den Innenwiderstand der Zelle erhöhen und die Energiedichte herabsetzen.

Für die Funktionsfähigkeit von galvanischen Elementen ist die Haftung zwischen Elektroden und Separator sowie zwischen Elektroden und Ableiterelektroden ein zentraler Punkt. Ein Kontaktverlust kann elektrochemisch oder auch als mechanischer Kontaktverlust durch Quellen der Elektroden im Elektrolyten oder durch Gasung als Folge von Zersetzung eintreten. Vorteilhaft sind dabei laminierte Zellen, da kein spontaner Kontaktverlust, beispielsweise durch Gasung, eintreten kann und aufgrund des Formfaktors einer größere Energiedichte erreicht werden kann. Ein Laminat ist aufgrund seines Herstellungsverfahrens im allgemeinen auch resistenter gegen Quellung.

Üblicherweise liegt einem solchen Laminat eine nasschemisch hergestellte Folie zugrunde, bei der eine erhebliche Menge, in der Regel mehr als 70 Gewichtsprozent aktives Material, in einem gelösten Binderpolymer suspendiert und zu einer Folie mittels Rakeln ausgezogen wird. Die Suspension enthält gegebenenfalls noch Weichmacher und Leitfähigkeitsverbesserer. Der Zellverbund wird hergestellt durch Lamination der Elektrodenfolien auf folienartige Ableiterelektroden, und der so erhaltene Verbund wird mit dem Separator in einem weiteren Laminatsschritt verbunden. Die Laminierungstemperatur liegt üblicherweise bei 110 bis 140° und erfolgt in einem Bandlaminator.

Allerdings lassen sich nicht alle aktiven Elektrodenmaterialien in einem nasschemischen Verfahren zu einer Folie gießen, die dann auch noch heiß laminierbar ist. Manche Folien lassen sich auf diesem Wege, abhängig von ihrer Herstellungsrezeptur, nicht verarbeiten. Einen Weg, die Laminationsfähigkeit dennoch zu erreichen, geht über den Zusatz von Weichmachern. Im Falle der Polymere PVDF und HFP wird als Weichmacher Dibutylphtalat verwendet, das nach der Lamination extrahiert werden muss.

Insbesondere Elektrodenmaterialien auf der Basis von Mangan, wie beispielsweise MnO₂ oder Spinelle wie LiMn₂O₄, die aufgrund ihrer geringen Kosten der Umweltfreundlichkeit und der guten Kapazitätswerte von hohem Interesse für den Einsatz in Lithiumzellen sind, lassen sich nach den oben genannten Verfahren nur schlecht verarbeiten.

Der Erfindung liegt die Aufgabe zugrunde, ein Verfahren zur Herstellung eines Separator/Elektrodenverbundes der eingangs genannten Art anzugeben, welches einfach durchführbar ist, bei dem insbesondere die Verarbeitung unter beliebiger Atmosphäre und mit einer weiten Auswahl von Elektrodenmaterial durchgeführt werden kann.

Diese Aufgabe wird erfindungsgemäß bei einem Verfahren der eingangs genannten Art durch die kennzeichnenden Merkmale des Anspruchs 1 gelöst. In den Unteransprüchen sind vorteilhafte Ausgestaltungen des Verfahrens und galvanische Elemente mit nach dem Verfahren hergestellten Elektroden-Separatorverbunden angegeben.

Für das Verfahren spielen die Benetzbarkeit und die effektive Oberfläche (BET-Oberfläche) sowohl des aktiven Materials der Elektrode wie auch des Substrats eine entscheidende Rolle. Ist beispielsweise die BET des aktiven Materials so beschaffen, dass das anbindende Polymer sich aufgrund der Oberflächenbeschaffenheit des Materials in Vertiefungen sammelt, so ergeben sich grundsätzliche Schwierigkeiten bei der Anbindung auf einen glatten Anbindungsuntergrund. Derartige Effekte treten insbesondere auf, wenn beispielsweise MnO₂ oder der Spinell LiMn₂O₄ insbesondere mit fluorierten Binderpolymeren verwendet wird.

Erfindungsgemäß wird dieses Problem damit gelöst, dass der Träger, auf den das aktive Material aufgegossen wird, ebenfalls Poren besitzt. Diese Eigenschaft besitzen an sich bekannte Polyolefin-Separatoren. Vorteilhaft ist, dass bei der Herstellung eine beispielsweise aus Polyester bestehende Zwischenträgerfolie entfallen kann, und gegenüber dem Laminationsprozess ist keine Vorbehandlung des Separators mit zum Binderpolymer der Elektrode kompatiblen Schichten nötig. Es lassen sich so Materialkombinationen zusammenfügen, die vorher nicht ohne besondere Maßnahmen zu Schichten zusammengefügt werden konnten.

Als bei erfindungsgemäßen Separator/Elektrodenverbund geeignete Polymere werden Polyvinylidenfluorid und Hexafluorpropylen verwendet. Als Lösungsmittel können beispielsweise N-Methylpyrolidin-2-on oder Aceton Verwendung finden. Das poröse Separatormaterial besteht insbesondere aus Polyolefinen oder aus Polypropylen, Polyethylen oder kann mehrlagig aus verschiedenen dieser Materialien hergestellt sein.

Als Material der negativen Elektrode kommt metallisches Lithium oder graphitisierter Kohlenstoff mit Modifikationen in Betracht, während die positive Elektrode als lithium-interkalierendes Material eine Manganverbindung oder beispielsweise elektrolytischen Braunstein enthält.

Die Pastenmischungen für negative Elektrodenfolien enthalten zwischen 55 und 95 Gewichtsprozent, vorzugsweise 65 bis 85 Gewichtsprozent Kohlenstoffmaterial. Die Pastenmischung für positive Elektroden enthält 65 bis 98 Gewichtsprozent, vorzugsweise 65 bis 95 Gewichtsprozent des positiven Elektrodenmaterials. Erfindungsgemäße Pastenmischungen enthalten 50 bis 75 Gewichtsprozent, vorzugsweise 55 bis 65 Gewichtsprozent Lösungsmittel. Das PVDF/HFP-Verhältnis liegt bei positiven Elektrodenfolien zwischen maximal 99,5 und minimal 0,5, vorzugsweise zwischen maximal 80 und minimal 20. Das Verhältnis der Molekulargewichte zwischen PVDF/HFP liegt zwischen 3,2 und 2,8, vorzugsweise zwischen 2,3 und 2,5.

Bei negativen Elektrodenfolien liegt das PVDF/HFP-Verhältnis zwischen 99,5 und 0,5, vorzugsweise zwischen 85 und 15. Das Verhältnis der Molekulargewichte liegt zwischen 3,2 und 2,8, vorzugsweise zwischen 2,3 und 2,5.

Die Masse wird so hergestellt, dass die Viskosität der Ausgangspaste auf 1 bis 10 Pascal, vorzugsweise 3 bis 6 Pascal, eingestellt ist.

Zur Herstellung von galvanischen Elementen wird der Separator/Elektrodeverbund oder Elektrode/Separator/Elektrodeverbund, der gemäß dem erfindungsgemäßen Verfahren hergestellt wurde, auf mindestens eine Ableitelektrode oder Elektrode auflaminiert, und der Stapel wird anschließend mit einem flüssigen organischen Elektrolyten getränkt.

### Beispiel:

Eine pastöse Masse wird hergestellt, indem man 77 Gewichtsprozent bei 360° C thermisch aktivierten Braunstein (elektrolytisches MnO₂), 6 Gewichtsprozent Graphit (KS 6, Timcal), 2 Gewichtsprozent Leitruß (Super P, Sedema) 7 Gewichtsprozent Polyviniylidenfluorid-Hexafluorpropylen (Kynar Flex 2801, Elf Atochem) und 8 Gewichtsprozent Propylencarbonat (Merck) in Aceton innig vermischt und die so erhaltende Masse auf einen Polyolefinseparator (Polypropylen, Celgard 2500) aufrakelt, das Lösemittel verdampft, das so erhaltene Band Vakuum trocknet (110 ° C, 48 h), mit einem organischen Lithiumelektrolyten tränkt, die Separator/Elektrode Verbundstückchen in 1,6 x 2,3 cm² Größe ausstanzt und in ein Kupferfoliengehäuse einlegt, auf dessen Deckelseite Lithium zuvor aufgepresst wurde, dessen Becherseite mit einem graphitbasierten Leitfähigkeitsverbesser versehen ist, und Becher und Deckel mit einer Isolationsschicht, dort wo Kupfer auf Kupfer trifft, ultraschallverschweißt.

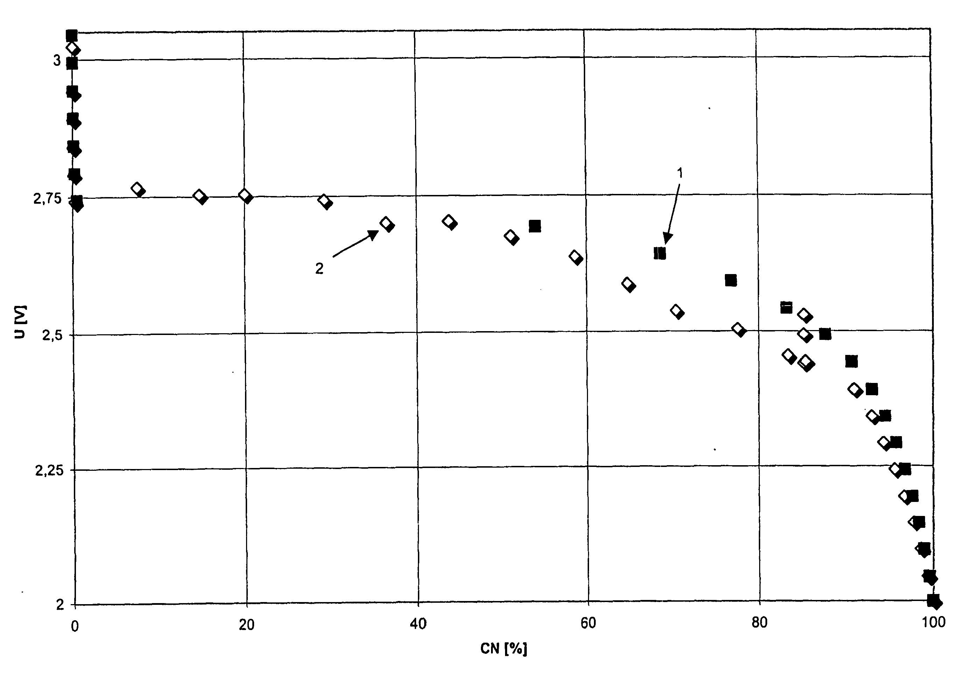

In Figur 1 ist die Spannung U in Abhängigkeit von der normierten Kapazität CN in Prozent für eine gemäß Beispiel hergestellte Flachzelle (Kurve 1, schwarze gefüllte Quadrate) und im Vergleich die Kapazität einer Knopfzelle gemäß industriellem Standardherstellungsverfahren (Einpressen der Kathodentablette und des Separators), der dieselbe Elektrochemie und Kathodenschichtdicke wie der Flachzelle zugrunde liegt, (Kurve 2, weiße, schwarz hinterlegte Rauten) dargestellt. Aus den Kurven ist ersichtlich, dass die entnehmbare Leistung über den Spannungsbereich bei der Flachzelle deutlich günstiger ausfällt. Die Stromdichte betrug 0,27 mA/cm².

## Patentansprüche

1. Verfahren zur Herstellung eines Separator/Elektrodenverbunds für galvanische Elemente, die mindestens eine lithium-interkalierende Elektrode enthalten, die eine Polymermatrix mit darin fein dispergierten, im Polymer unlöslichen elektrochemisch aktiven Materialien aufweist, wobei eine Pastenmischung aus einem PVDF/HFP-Polymer und einem in dem Polymer unlöslichen elektrochemisch aktiven Material hergestellt wird, **dadurch gekennzeichnet, dass** die Pastenmischung direkt auf eine poröse Membran aus Polyolefinen aufgebracht und getrocknet wird.

2. Verfahren nach Anspruch 1, **dadurch gekennzeichnet, dass** als positives lithium-interkalierendes Material eine Manganverbindung verwendet wird.

3. Verfahren nach Anspruch 1, **dadurch gekennzeichnet, dass** als negatives aktives Material metallisches Lithium verwendet wird.

4. Verfahren Anspruch 1, **dadurch gekennzeichnet, dass** als elektrochemisch aktives Material der negativen Elektrodenfolie eine graphitisierte Kohlenstoffmodifikation verwendet wird.

5. Verfahren nach einem der Ansprüche 1 bis 4, **dadurch gekennzeichnet, dass** die Pastenmischung für negative Elektrodenfolien zwischen 55 and 95 Gew.% an Kohlenstoffmaterial enthält.

6. Verfahren nach einem der Ansprüche 1 bis 5, **dadurch gekennzeichnet, dass** die Pastenmischung für positive Elektrodenfolien zwischen 65 bis 98 Gew.% des positiven Elektrodenmaterials enthält.

7. Verfahren nach einem der Ansprüche 1 bis 6, **dadurch gekennzeichnet, dass** die Pastenmischung 50 bis 75 Gewichtsprozent Lösungsmittel enthält.

8. Galvanisches Element mit mindestens einem Elektroden/Separatorverbund, der nach einem Verfahren gemäß einem der vorhergehenden Ansprüche hergestellt ist.

9. Galvanisches Element mit mindestens einer lithiuminterkalierenden Elektrode, die eine Polymermatrix mit darin fein dispergierten, im Polymer unlöslichen elektrochemisch aktiven Materialien aufweist, **dadurch gekennzeichnet, dass** es einen Separator/Elektrodenverbund mit einer porösen Membran aus Polyolefinen umfasst, dass die Polymermatrix aus einem PVDF/HFP-Polymer besteht und dass die Polymermatrix direkt auf das poröse Separatormaterial aufgebracht ist.

## Claims

1. A method for producing a separator/electrode assembly for electrochemical cells which contain at least one lithium-intercalating electrode comprising a polymer matrix including finely dispersed therein electrochemically active materials insoluble in the polymer, a paste mixture being prepared based on a PVDF/HFP polymer and an electrochemically active material insoluble in the polymer, **characterized in that** the paste mixture is directly applied to a porous polyolefine membrane and dried.

2. The method as claimed in claim 1, **characterized in that** a manganese compound is used as positive lithium-intercalating material.

3. The method as claimed in claim 1, **characterized in that** metallic lithium is used as negative active material.

4. The method as claimed in claim 1, **characterized in that** a graphitized carbon modification is used as the electrochemically active material for the negative electrode sheet.

5. The method as claimed in any of claims 1 through 4, **characterized in that** the paste mixture for negative electrode sheets contains between 55 and 95 % by weight of carbon material.

6. The method as claimed in any of claims 1 through 5, **characterized in that** the paste mixture for positive electrode sheets contains between 65 to 98 % by weight of carbon material.

7. The method as claimed in any of claims 1 through 6, **characterized in that** the paste mixture contains 50 to 75 % by weight of solvent.

8. An electrochemical element having at least one electrode/separator assembly, which is produced using a method as claimed in any of the preceding claims.

9. An electrochemical element having at least one lithium-intercalating electrode comprising a polymer matrix including finely dispersed therein electrochemically active materials insoluble in the polymer, **characterized in that** the electrochemical element comprises a separator/electrode assembly including a porous polyolefine membrane, the polymer matrix is made of PVDF/HFP polymer, and the polymer matrix is directly applied to the porous separator material.

## Revendications

1. Procédé de fabrication d'un composite séparateur-électrode pour éléments galvaniques qui contiennent au moins une électrode intercalaire en lithium qui elle-même présente une matrice polymère dans laquelle sont dispersés finement des matériaux électrochimiquement actifs et insolubles dans le polymère, un mélange pâteux constitué d'un polymère de PVDF/HFP et d'un matériau électrochimiquement actif insoluble dans le polymère étant préparé,
**caractérisé en ce que**
le mélange pâteux est appliqué directement sur une membrane poreuse en polyoléfines et est séché.

2. Procédé selon la revendication 1, **caractérisé en ce qu'**il utilise un composé du manganèse comme matériau intercalaire positif de lithium.

3. Procédé selon la revendication 1, **caractérisé en ce qu'**il utilise du lithium métallique comme matériau négatif actif.

4. Procédé selon la revendication 1, **caractérisé en ce qu'**il utilise une variante graphitée du carbone comme matériau électrochimiquement actif du film d'électrode négative.

5. Procédé selon l'une des revendications 1 à 4, **caractérisé en ce que** le mélange pâteux prévu pour le film d'électrode négative contient entre 55 et 95 pour cent en poids de matériau à base de carbone.

6. Procédé selon l'une des revendications 1 à 5, **caractérisé en ce que** le mélange pâteux pour le film d'électrode positive contient entre 65 et 98 pour cent en poids du matériau d'électrode positive.

7. Procédé selon l'une des revendications 1 à 6, **caractérisé en ce que** le mélange pâteux contient entre 50 et 75 pour cent en poids de solvant.

8. Elément galvanique présentant au moins un composite électrode-séparateur réalisé à l'aide d'un procédé selon l'une des revendications précédentes.

9. Elément galvanique présentant au moins une électrode intercalaire de lithium qui présente une matrice polymère dans laquelle sont dispersés des matériaux électrochimiquement actifs insolubles dans le polymère,
**caractérisé en ce que**
il comporte un composite de séparateur-électrode doté d'une membrane poreuse en polyoléfines,
**en ce que** la matrice polymère est constituée d'un polymère de PVDF-HFP et
**en ce que** la matrice polymère est appliquée directement sur le matériau poreux du séparateur.
